# EUROPÄISCHE PATENTSCHRIFT

(11) **EP 1 998 240 B1**
(45) Veröffentlichungstag und Bekanntmachung des Hinweises auf die Patenterteilung: **15.05.2013**
(21) Anmeldenummer: 07010728.9
(22) Anmeldetag: 30.05.2007
(51) Int. Cl.: G05B 19/05

(54) **Zyklisch arbeitende Steuerung sowie Verfahren zum Einketten von Software-Bausteinen in den Funktionsablauf einer Steuerung**
Control system with cyclical operation and method for incorporating software building blocks in the functional process of a control system
Commande fonctionnant de manière cyclique et procédé destiné à intégrer des modules logiciels dans le processus de fonctionnement d'une commande

(43) Veröffentlichungstag der Anmeldung: 03.12.2008
(73) Patentinhaber: Siemens Aktiengesellschaft, 80333 München (DE)
(72) Erfinder: Becker, Peter, 76571 Gaggenau (DE)

(56) Entgegenhaltungen:
- EP-A- 1 457 850
- US-A- 3 969 723

## Beschreibung

Die Erfindung betrifft eine zyklisch arbeitende Steuerung nach dem Oberbegriff des Anspruchs 1, insbesondere eine speicherprogrammierbare Steuerung, mit einem Speicher, in welchen Software-Bausteine speicherbar sind, welche ein Anwenderprogramm enthalten und welche während des Funktionsablaufs der Steuerung mittels eines Lade-Kommandos in den Speicher ladbar und nach dem Laden mittels eines Einkett-Kommandos in den Funktionsablauf der Steuerung einkettbar sind. Des Weiteren betrifft die Erfindung ein Verfahren nach dem Oberbegriff des Anspruchs 8, zum Einketten von ein Anwenderprogramm aufweisenden Software-Bausteinen in den Funktionsablauf einer Steuerung, insbesondere einer speicherprogrammierbaren Steuerung, bei dem die Software-Bausteine zunächst in einen Ladespeicher geladen werden und anschließend mittels eines Einkett-Kommandos in den Funktionsablauf der Steuerung eingekettet werden. Darüber hinaus betrifft die Erfindung ein Computerprogrammprodukt zum Betreiben einer Steuerung.

Unter Software-Bausteinen werden im Sinne der Erfindung nicht nur solche verstanden, welche ein Anwenderprogramm aufweisen, sondern auch solche, welche Anwenderdaten oder so genannte Instanzdaten einschließlich Systemdaten enthalten. Das heißt, Software-Bausteine können beispielsweise bei speicherprogrammierbaren Steuerungen Programmbausteine, welche beispielsweise einen Funktionscode und/oder einen Funktionsblock aufweisen, oder Datenbausteine, Instanz-Datenbausteine oder Systemdatenbausteine sein.

Zyklisch arbeitende Steuerungen, insbesondere speicherprogrammierbare Steuerungen, sind im Stand der Technik hinlänglich bekannt und werden heute in großer Zahl beispielsweise im Anlagen- und Maschinenbau sowie in der Fertigungs- oder Verfahrenstechnik ebenso wie in der Verkehrsleittechnik als Prozesssteuerung eingesetzt. Sie weisen regelmäßig eine Zentralbaugruppe sowie überwiegend als Eingabe- oder Ausgabebaugruppen ausgebildete Peripheriebaugruppen auf.

In der Zentralbaugruppe lässt sich ein Anwenderprogramm speichern, mittels dem der betreffende Prozess gesteuert wird. Das Anwenderprogramm ist regelmäßig modular aufgebaut und weist die Programmmodule bildenden Funktionsbausteine auf. Beim Funktionsablauf der Steuerung, dem so genannten RUN-Zustand, werden die Funktionsbausteine zyklisch durchlaufen, wodurch die Prozesssteuerung durchgeführt wird. Neben den Funktionsbausteinen weist die Zentraleinheit regelmäßig noch Operationsbausteine auf, welche mittels eines beispielsweise als Alarm definierten Ereignisses oder zu vorgegebenen Zeitpunkten aufgerufen werden können. Beim Aufruf eines Operationsbausteins verlässt die Steuerung ihren zyklischen Ablauf und arbeitet zunächst den im Operationsbaustein vorhandenen Programmteil ab, welcher ein Anwenderprogramm (Software-Baustein) sein kann, wobei beim Start des Operationsbausteins an den Operationsbaustein Ereignisdaten übergeben werden, die in diesem Operationsbaustein oder, durch entsprechende Programmierung, in anderen, beispielsweise zyklisch bearbeiteten Funktionsbausteinen bearbeitet werden. Nach Abarbeitung des Operationsbausteins setzt die Steuerung ihren zyklischen Funktionsablauf an der Stelle fort, an der sie ihn verlassen hat.

Häufig ist es erforderlich, dass Operationsbausteine, Funktionsbausteine oder ebenfalls die Steuerung betreffende Datenbausteine während des Funktionsablaufs dem Steuerungsprogramm hinzugefügt, gelöscht oder geändert werden müssen. So können Programmänderungen während des Funktionsablaufs der Steuerung beispielsweise erforderlich sein, um Optimierungen vorzunehmen oder den Produktionsablauf beispielsweise bei einem Rezeptwechsel zu ändern. Hierzu wird mittels eines Programmiergeräts oder eines Engineering-Systems ein entsprechendes Kommando an die Zentralbaugruppe übermittelt.

Zur Änderung oder Einfügung eines Software-Bausteins (Operationsbaustein, Funktionsbaustein, Datenbaustein) wird der geänderte oder neue Software-Baustein zunächst mittels eines Lade-Kommandos in einen Ladespeicher der Zentralbaugruppe geschrieben. Nachdem sich der Software-Baustein in dem Ladespeicher befindet, wird mittels eines Einkett-Kommandos bewirkt, dass der Software-Baustein von dem Ladespeicher in einen Arbeitsspeicher der Zentralbaugruppe, in dem sich auch die übrigen Software-Bausteine befinden, kopiert wird. Befindet sich der geänderte oder neue Software-Baustein im Arbeitsspeicher, wird er beim nächsten Durchlauf durch den so genannten Zykluskontrollpunkt, das heißt den Startpunkt des Anwenderprogramms, in den Funktionsablauf der Steuerung eingebunden, was heißt, dass er nunmehr entsprechend seiner Anordnung im Funktionsablauf der Steuerung zyklisch durchlaufen und ausgeführt wird.

Durch die Einkettung des geänderten beziehungsweise neuen Software-Bausteins am Zykluskontrollpunkt wird erreicht, dass ohne Kenntnis der Programmlogik sichergestellt werden kann, dass alle Programmabschnitte abgeschlossen und damit alle Abhängigkeiten zwischen den Programmabschnitten aufgelöst sind. Dennoch ist die unbedingte Einkettung der Software-Bausteine am Zykluskontrollpunkt nicht zufrieden stellend, da hierdurch einer Vielzahl von Problemen, die durch Änderungen von Software-Bausteinen im Betriebszustand RUN entstehen können, nicht Rechnung getragen wird.

So kann es in Abhängigkeit eines Prozesses, der durch ein Software-Bausteine aufweisendes Anwenderprogramm gesteuert werden soll, beispielsweise erforderlich sein, dass die durch eine Einkettung eines geänderten oder neuen Software-Bausteins in das Anwenderprogramm hervorgerufene Programmänderung koordiniert werden muss. Beispielsweise kann es erforderlich sein, dass mehrere geänderte oder neue Software-Bausteine gleichzeitig in den Funktionsablauf der Steuerung eingekettet werden müssen. Dies ist beispielsweise bei einer Produktänderung (Rezeptwechsel) einer Anlage notwendig. Des Weiteren kann es bei einem die Funktion eines Reglers ausführenden Software-Baustein erforderlich sein, die Reglerdaten des aktuellen Prozesszustandes in den neuen Software-Baustein zu übernehmen, um hierdurch beim Einketten des neuen Software-Bausteins eine Stoßfreiheit zu erreichen. Des Weiteren kann es erforderlich sein, dass Systeminstanzen, welche nach einer Programmänderung nicht mehr bearbeitet werden, mit der Programmänderung freigegeben werden müssen. Darüber hinaus kann es für eine Programmänderung erforderlich sein, dass unterlagerte Steuerungen angehalten und nach der Programmänderung wieder gestartet werden müssen.

Die vorstehenden beispielhaft genannten Probleme müssen heute individuell meist mit großem kommunikationstechnischem Aufwand gelöst werden. So werden beispielsweise zur Aktivierung von geänderten Programmsequenzen mit einem Programmiergerät oder einem Engineering-System Variablen beschrieben, die im Anwenderprogramm ständig gepollt werden, um die geänderten Programmsequenzen wirksam werden lassen zu können. Um in einem geänderten Instanz-Datenbaustein aktuelle Prozesswerte zu integrieren, müssen die Werte beispielsweise aus dem bisherigen Instanz-Datenbaustein geladen und in den neuen Instanz-Datenbaustein kopiert werden. Anschließend muss die Instanz und der zugehörige Programmbaustein koordiniert auf der speicherprogrammierbaren Steuerung zum Ablauf gebracht werden. Eine programmiertechnische Lösung ist zudem sehr schwierig, da der betreffende Programmteil sowie die betreffenden Daten ausgetauscht werden müssen und die Daten an die neue Instanz mit aktuellen Prozesswerten anzupassen sind.

Werden Programmteile gelöscht, in deren Folgen Systeminstanzen zu löschen sind, wie dies beispielsweise bei Alarm-Bausteinen der Fall ist, fehlt dem Anwenderprogramm das Ereignis, dass bestimmte Programmteile gelöscht wurden, um beispielsweise aus einer Zuordnungsliste die entsprechenden Systeminstanzen zu löschen.

Aus der US-A-3 969 723 ist eine Steuerung gemäß dem Oberbegriff des Anspruchs 1 bekannt, bei welcher das Anwenderprogramm online geändert werden kann. Hierzu werden mittels einer Bedienkonsole von zu ändernden Programmsegmenten des Anwenderprogramms Kopien erstellt und in einen Kopie-Bereich des Speichers geladen. In dem Kopie-Bereich lassen sich die Programmsegmente mittels der Bedienkonsole ändern. Nach der Änderung kann mittels der Bedienkonsole veranlasst werden, dass die geänderten Programmsegmente anstelle der unveränderten ursprünglichen Programmsegmente vom Steuerungsprogramm ausgeführt werden. Sofern sich hierbei ergibt, dass die Änderungen übernommen werden können, kann mittels der Bedienkonsole veranlasst werden, dass die ursprünglichen Programmsegmente durch die geänderten Programmsegmente ersetzt werden. Angaben über die Umstände der Einbindung der geänderten Programmsegmente in den Programmablauf lassen sich der Druckschrift nicht entnehmen.

Es ist Aufgabe der Erfindung, eine eingangs genannte Steuerung beziehungsweise ein eingangs genanntes Verfahren derart auszubilden, dass die Einkettung von Software-Bausteinen in den Funktionsablauf einer Steuerung problemloser erfolgt.

Die Lösung dieser Aufgabe ergibt sich aus den Merkmalen des kennzeichnenden Teils des Anspruchs 1 sowie des Anspruchs 8. Vorteilhafte Weiterbildungen der Erfindung ergeben sich aus den Unteransprüchen.

Dadurch, dass ein Einkett-Operations-Baustein vorhanden ist, welcher ein Anwenderprogramm enthält, mittels dem die Einkettung der Software-Bausteine in den Funktionsablauf der Steuerung steuerbar ist, das heißt die Einkettung mittels eines Anwender-Einkett-Programmteils erfolgt, wird in vorteilhafter Weise erreicht, dass die Einkettung der Software-Bausteine nicht mehr bedingungslos erfolgt, sondern von Bedingungen abhängig gemacht werden kann. Da die Bedingungen als Anwenderprogramm geschrieben werden können, lassen sie sich problemlos an den zu steuernden Prozess anpassen. Insbesondere kann die Einkettung von aktuellen Prozessparametern oder dem aktuellen Status der Steuerung abhängig gemacht werden.

Soll ein Software-Baustein in den Funktionsablauf einer Steuerung eingekettet werden, wird mittels eines Programmiergeräts oder eines Engineering-Systems zunächst ein LadeKommando an die Zentralbaugruppe der Steuerung übertragen, wodurch der einzukettende Software-Baustein in einen Ladespeicher geladen wird. Danach wird ein Einkett-Kommando an die Zentralbaugruppe der Steuerung übertragen. Durch das Einkett-Kommando wird ein Einkett-Operations-Baustein gestartet, welcher ein Anwenderprogramm enthält, mittels dem die Einkettung des betreffenden Software-Bausteins in den Funktionsablauf der Steuerung gesteuert wird. Mittels des Anwenderprogramms können neben der Ausführung von vom Anwender vorgegebenen Befehlen, welche auch in den Software-Bausteinen enthalten sein können, auch Betriebssystem-Funktionen zur Ausführung aufgerufen werden.

In vorteilhafter Weise werden dem Einkett-Operations-Baustein beim Start den einzukettenden Software-Baustein betreffende Daten wie Bausteintyp, Bausteinname oder -nummer sowie Adressen übergeben. Hierdurch erhält der Einkett-Operations-Baustein alle den einzukettenden Software-Baustein betreffenden Daten, welche von dem im Einkett-Operations-Baustein vorhandenen Anwenderprogramm bearbeitet werden können. Das heißt, vor dem Einketten des betreffenden Software-Bausteins in den Funktionsablauf der Steuerung wird das im Einkett-OperationsBaustein vorhandene Anwenderprogramm ausgeführt, wodurch der Anwender in der Lage ist, eine kontrollierte Einkettung des betreffenden Software-Bausteins vorzunehmen.

In vorteilhafter Weise kann der Einkett-Operations-Baustein Bedingungen enthalten, in Abhängigkeit welcher die Einkettung des einzukettenden Software-Bausteins erfolgt. Aufgrund der Bedingungen kann sich beispielsweise ergeben, dass der betreffende Software-Baustein beim nächsten Durchlauf des Anwenderprogramms durch den Zykluskontrollpunkt in den Funktionsablauf der Steuerung eingekettet wird oder die Einkettung zu einem anderen Zeitpunkt vorgenommen. Die Einkettung erfolgt mittels des Anwenderprogramms durch Aufruf (Aktivierung beziehungsweise Start) des Anwender-Einkett-Programmteils. Aufgrund der Bedingungen kann sich aber auch ergeben, dass der betreffende Software-Baustein zunächst noch nicht eingekettet wird.

Der Anwender wird somit in die Lage versetzt, eine Gruppe von Software-Bausteinen dann einzuketten, wenn alle Software-Bausteine dieser Gruppe bereitstehen. Theoretisch ist es möglich, eine unbegrenzte Anzahl von Software-Bausteinen gleichzeitig einzuketten. Des Weiteren ist der Anwender in der Lage, gezielt an den richtigen Programmstellen, beispielsweise vor einer Bearbeitung einer Regelfunktion, aktuelle Prozessdaten in den neuen Software-Baustein zu kopieren und anschließend den neuen Software-Baustein einzuketten, woraufhin er dann anstelle des bisherigen Software-Bausteins im Funktionsablauf der Steuerung durchlaufen wird.

Ein weiteres Beispiel ist eine gezielte Initialisierungsbearbeitung von Software-Bausteinen nach dem Einketten.

Bei einer vorteilhaften Ausführungsform der Erfindung ist vorgesehen, mittels des Einkett-Operations-Bausteins Daten des einzukettenden Software-Bausteins auszulesen und/oder zu ändern, wobei hierzu Betriebssystemfunktionen verwendet werden können.

In gleicher Weise, wie das Einketten von Software-Bausteinen durch ein Anwenderprogramm gesteuert werden kann, können auch Software-Bausteine aus dem Funktionsablauf der Steuerung entfernt werden. Mittels des Anwenderprogramms können der Ort und der Zeitpunkt, zu dem der betreffende Software-Baustein gelöscht werden soll, bestimmt werden. Dies kann beispielsweise dann Anwendung finden, wenn eine Produktserie beendet wird und eine neue beginnt. Auch Systeminstanzen können dann gezielt zum richtigen Zeitpunkt gelöscht werden.

Ebenso wie es mittels der vorliegenden Erfindung möglich ist, Software-Bausteine in den Funktionsablauf einer Steuerung einzuketten, lassen sich auch unterlagerte Steuerungen in den Funktionsablauf der Steuerung eingliedern.

Wenngleich es mittels der vorliegenden Erfindung in vorteilhafter Weise insbesondere möglich ist, Software-Bausteine während des Funktionsablaufs der Steuerung in den Funktionsablauf der Steuerung einzuketten, so ist es aber auch möglich, die Einkettung eines Software-Bausteins im angehaltenen Zustand der Steuerung, das heißt im Betriebszustand STOP, vorzunehmen. Dies ist insbesondere dann erforderlich, wenn Systemdatenbausteine eingekettet werden sollen, welche nur im Zustand STOP geladen werden können.

Mittels der vorliegenden Erfindung ist es möglich, das Laden, Einketten und Löschen von Software-Bausteinen mit dem Funktionsablauf der Steuerung zu synchronisieren. Durch das im Einkett-Operations-Baustein vorhandene Anwenderprogramm kann bestimmt werden, wann und wo ein Software-Baustein gelöscht oder eingekettet wird und welche aktuellen Prözesswerte in diesen Software-Bausteinen stehen oder in diese geschrieben werden sollen.

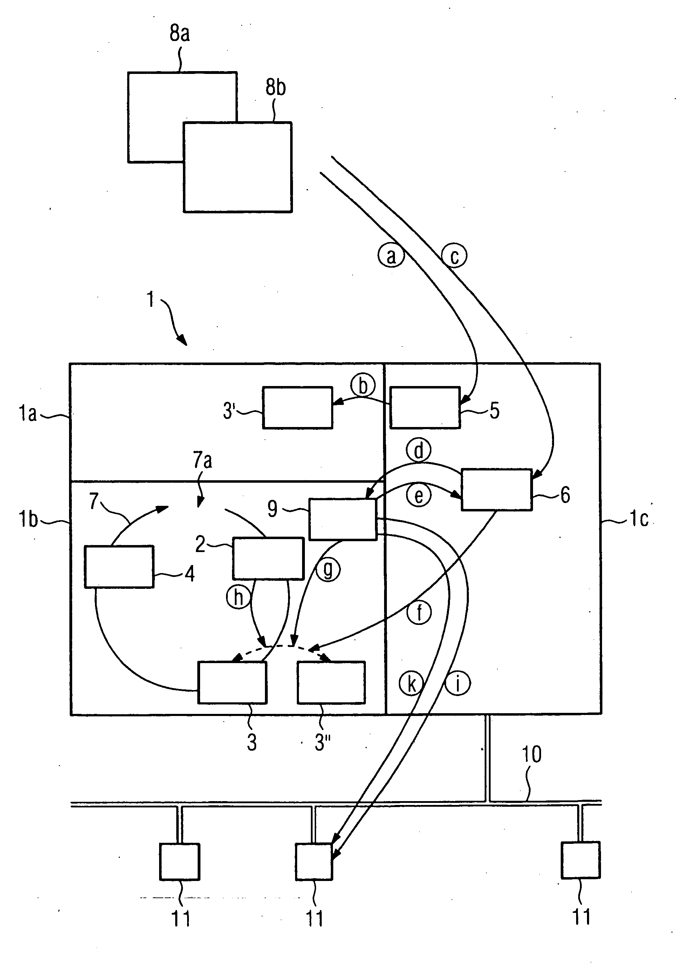

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt die einzige Figur ein Funktionsschema einer erfindungsgemäßen Steuerung.

Wie der Figur entnommen werden kann, weist eine als speicherprogrammierbare Steuerung ausgebildete zyklisch arbeitende Steuerung 1 einen Ladespeicher 1a, einen Arbeitsspeicher 1b und ein Betriebssystem 1c auf.

Im Arbeitsspeicher 1b ist das Anwenderprogramm abgelegt, welches einen ersten Software-Baustein 2, einen zweiten Software-Baustein 3 und einen dritten Software-Baustein 4 aufweist. Die Software-Bausteine 2, 3, 4 werden zyklisch durchlaufen, das heißt abgearbeitet, was durch den kreisförmigen Pfeil 7 dargestellt ist. Mittels des Anwenderprogramms wird der mittels der Steuerung 1 zu steuernde Prozess gesteuert. Startpunkt des Anwenderprogramms ist der so genannte Zykluskontrollpunkt 7a. Im Zykluskontrollpunkt 7a befindet sich das Anwenderprogramm in einem definierten Grundzustand.

Soll beispielsweise der zweite Software-Baustein 3 modifiziert werden, wird ein modifizierter zweiter Software-Baustein 3' zunächst in den Ladespeicher 1a geladen. Dies geschieht mittels eines von einem Programmiergerät 8a oder einem Engineering-System 8b an das Betriebssystem 1c übermittelten Lade-Kommandos a.

Im Betriebssystem 1c befindet sich ein erster Betriebssystem-Funktions-Baustein 5. Empfängt der erste Betriebssystem-Funktions-Baustein 5 das Ladekommando a, veranlasst er die Übertragung b des modifizierten zweiten Funktions-Bausteins 3' in den Ladespeicher 1a.

Nachdem sich der modifizierte zweite Software-Baustein 3' im Ladespeicher 1a befindet, wird von dem Programmiergerät 8a beziehungsweise Engineering-System 8b an das Betriebssystem 1c ein Einkett-Kommando c übermittelt.

Zur Durchführung der Einkettung des modifizierten zweiten Software-Bausteins 3' in den Programmablauf 7 der Steuerung 1 weist das Betriebssystem 1c einen zweiten Betriebssystem-Funktions-Baustein 6 auf, der das Einkett-Kommando c empfängt. Aufgrund des Einkett-Kommandos c wird eine Kopie 3" des modifizierten zweiten Software-Bausteins 3' in den Arbeitsspeicher 1b geladen.

Der bisher beschriebene Aufbau beziehungsweise Funktionsablauf entspricht dem Aufbau beziehungsweise dem Funktionsablauf einer herkömmlichen speicherprogrammierbaren Steuerung, weshalb hierauf an dieser Stelle nicht näher eingegangen wird.

Im Gegensatz zu der Funktionsweise einer herkömmlichen speicherprogrammierbaren Steuerung, bei der die Einkettung der sich im Arbeitsspeicher befindlichen Kopie 3" des modifizierten zweiten Software-Bausteins 3' in den Programmablauf 7 beim nächsten Durchlauf des Zykluskontrollpunkts 7a erfolgt, wird bei der vorliegenden Erfindung mittels des zweiten Betriebssystem-Funktions-Bausteins 6 ein Einkett-OperationsBaustein 9, welcher sich im Arbeitsspeicher 1b befindet, gestartet. Hierzu wird vom zweiten Betriebssystem-FunktionsBaustein 6 an den Einkett-Operations-Baustein 9 ein Einkett-Befehl d gesendet. Des Weiteren werden dem Einkett-Operations-Baustein 9 der Baustein-Typ, die Baustein-Nummer und die Adresse des einzukettenden Software-Bausteins 3 übermittelt.

Es ist aber auch möglich, dass der Einkett-Vorgang bereits unmittelbar durch das Ladekommando a eingeleitet wird. Dann enthält der Einkett-Operations-Baustein 9 das Einkett-Kommando vom ersten Betriebssystem-Funktions-Baustein 5, weshalb der Einkett-Operations-Baustein 9 dann einen Programmteil enthalten muss, mittels dem der einzukettende Software-Baustein 3' aus dem Ladespeicher 1a in den Arbeitsspeicher 1b kopiert werden kann.

Des Weiteren ist es möglich, dass das Code-Kommando beziehungsweise das Einkett-Kommando aus dem Anwenderprogramm kommen. Im Anwenderprogramm kann beispielsweise durch Pollen herausgefunden werden, ob eine Einkettung erfolgen soll und welche Software-Bausteine zum Einketten bereitstehen.

Im Einkett-Operations-Baustein 9 ist ein Anwender-Einkett-Programm enthalten, mittels dem die Einkettung der Kopie 3" des modifizierten zweiten Software-Bausteins 3' in den Programmablauf 7 gesteuert wird.

Mittels des Anwender-Einkett-Programms lässt sich aufgrund von im Anwender-Einkett-Programm enthaltenen Abfragen oder Befehlen erreichen, dass die Einkettung des modifizierten zweiten Software-Bausteins 3" in den Programmablauf 7 zu einem vom Anwender festgelegten Zeitpunkt erfolgt. Das heißt, der Anwender hat es in der Hand zu bestimmen, ob beziehungsweise wann und unter welchen Voraussetzungen der modifizierte zweite Software-Baustein 3" in den Programmablauf 7 eingekettet wird. Aufgrund des Anwender-Einkett-Programms ist es möglich, die Einkettung des modifizierten zweiten Software-Bausteins 3" (zunächst) zu unterbinden, sie beim nächsten Durchlaufen des Zykluskontrollpunkts 7a vorzunehmen oder sie zu einem vorbestimmten anderen Zeitpunkt (beispielsweise sofort) vorzunehmen, wobei sich der Programmablauf 7 dann nicht am Zykluskontrollpunkt 7a befinden muss.

Soll als Ergebnis der Abarbeitung des Anwender-Einkett-Programms der modifizierte zweite Software-Baustein 3" beim nächsten Durchlauf des Zykluskontrollpunktes 7a in den Programmablauf 7 eingekettet werden, sendet der Einkett-Operations-Baustein 9 eine entsprechende Meldung e an den zweiten Betriebssystem-Funktions-Baustein 6. Dieser veranlasst dann mittels eines Einkett-Befehls f die Einkettung des modifizierten zweiten Software-Bausteins 3" in den Programmablauf 7 beim nächsten Durchlauf des Zykluskontrollpunkts 7a. Die Einkettung kann auf herkömmliche Weise mittels eines Austauschs der Adressen des zweiten Software-Bausteins 3 und des modifizierten zweiten Software-Bausteins 3" geschehen.

Soll als Ergebnis der Abarbeitung des Anwender-Einkett-Programms der modifizierte zweite Software-Baustein 3" sofort in den Programmablauf 7 eingekettet werden, wird dies vom Einkett-Operations-Baustein 9 mittels eines entsprechenden Befehls g vorgenommen.

Soll aufgrund des Ergebnisses der Abarbeitung des Anwender-Einkett-Programms der modifizierte zweite Software-Baustein 3" nicht oder zu einem späteren Zeitpunkt in den Programmablauf 7 eingekettet werden, sendet der Einkett-OperationsBaustein 9 eine entsprechende andere Meldung e an den zweiten Betriebssystem-Funktions-Baustein 6. Dieser nimmt die Einkettung des modifizierten zweiten Software-Bausteins 3" in den Programmablauf 7 dann nicht vor. Das heißt, der entsprechende Befehl f wird nicht ausgeführt.

Stattdessen übernimmt das Anwender-Einkett-Programm die Einkettung des modifizierten zweiten Software-Bausteins 3" in den Programmablauf 7. Wenn später als Ergebnis der Ausführung des Anwender-Einkett-Programms der modifizierte zweite Software-Baustein 3" in den Programmablauf 7 eingekettet werden soll, wird dies von dem Anwender-Einkett-Programm veranlasst. Da Teile des Anwender-Einkett-Programms auch in den Software-Bausteinen 2, 3, 4 stehen können, kann die Einkettung des modifizierten zweiten Software-Bausteins 3" in den Programmablauf 7 beispielsweise mittels eines entsprechenden Befehls h des ersten Software-Bausteins 2 vorgenommen werden.

Über einen Kommunikations-Bus 10 können mit der Zentralbaugruppe 1c auch unterlagerte Steuerungen 11 verbunden sein. Die unterlagerten Steuerungen 11 lassen sich mittels des Einkett-Operations-Bausteins 9 bearbeiten. So können beispielsweise Daten an die unterlagerten Steuerungen 11 übermittelt oder aus den unterlagerten Steuerungen 11 ausgelesen werden. Insbesondere kann der Einkett-Operations-Baustein 9 veranlassen, dass mittels eines Befehls i die unterlagerten Steuerungen 11 angehalten werden und zu gegebener Zeit mittels eines Befehls k wieder gestartet werden. Hierdurch ist es möglich, Software-Bausteine 3" in den Programmablauf 7 einzuketten, die mit den unterlagerten Steuerungen 11 einen Datenaustausch haben.

## Patentansprüche

1. Zyklisch arbeitende Steuerung (1), insbesondere speicherprogrammierbare Steuerung, mit einem Speicher (1b), in welchen Software-Bausteine (2, 3, 4, 3', 3'') eines Anwenderprogramms speicherbar sind, und welche während des Programmablaufs (7) der Steuerung (1) mittels eines Lade-Kommandos (a) in den Speicher ladbar und nach dem Laden mittels eines Einkett-Kommandos (c) in den Programmablauf (7) der Steuerung (1) einkettbar sind, **dadurch gekennzeichnet, dass** ein Einkett-Operations-Baustein (9) im Arbeitsspeicher (16) vorhanden ist, welcher ein Anwender-Einkett-Programm enthält, mittels dem die Einkettung der Software-Bausteine (3'') in den Programmablauf (7) der Steuerung (1) steuerbar ist,
und dass der Einkett-Operations-Baustein (9) Bedingungen enthält, in Abhängigkeit welcher die Einkettung des einzukettenden Software-Bausteins (3") erfolgt.

2. Steuerung nach Anspruch 1, **dadurch gekennzeichnet, dass** der Einkett-Operations-Baustein (9) mittels des Einkett-Kommandos (c) startbar ist.

3. Steuerung nach Anspruch 1 oder 2, **dadurch gekennzeichnet, dass** die den einzukettenden Software-Baustein (3") betreffenden Daten wie Bausteintyp, Bausteinname oder -nummer sowie Adressen mittels des Einkett-Kommandos (c) dem Einkett-Operations-Baustein (9) übermittelt werden.

4. Steuerung nach einem der Ansprüche 1 bis 3, **dadurch gekennzeichnet, dass** mittels des Einkett-Operations-Bausteins (9) Daten des einzukettenden Software-Bausteins (3'') auslesbar und/oder änderbar sind.

5. Steuerung nach einem der Ansprüche 1 bis 4, **dadurch gekennzeichnet, dass** wenigstens eine unterlagerte Steuerung (11) vorhanden ist, welche mittels des Einkett-Operations-Bausteins (9) bearbeitbar ist.

6. Steuerung nach einem der Ansprüche 1 bis 5, **dadurch gekennzeichnet, dass** der Einkett-Operations-Baustein (9) auch bei nicht durchgeführtem Funktionsablauf (7) der Steuerung (1) abarbeitbar ist.

7. Verfahren zum Einketten von Software-Bausteinen (3, 4, 5, 3', 3'') eines Anwenderprogramms in den Programmablauf (7) einer Steuerung (1), insbesondere einer speicherprogrammierbaren Steuerung, bei dem die Software-Bausteine (3') zunächst in einen Ladespeicher (la) geladen werden und anschließend mittels eines Einkett-Kommandos (c) in den Programmablauf (7) der Steuerung (1) eingekettet werden, **dadurch gekennzeichnet, dass** die Einkettung mittels eines Anwender-Einkett-Programms eines Einkett-Operations-Bausteins (9) erfolgt, mittels dem die Einkettung der Software-Bausteine (3'') in den Programmablauf (7) der Steuerung (1) steuerbar ist, und
dass die Einkettung des einzukettenden Software-Bausteins (3") erst nach Erfüllung von im Anwender-Einkett-Programm enthaltenen Bedingungen erfolgt.

8. Verfahren nach Anspruch 7, **dadurch gekennzeichnet, dass** der Einkett-Programmteil mittels des Einkett-Kommandos gestartet wird.

9. Verfahren nach Anspruch 7 oder 8, **dadurch gekennzeichnet, dass** der Einkett-Programmteil den einzukettenden Software-Baustein (3'') bearbeiten kann.

10. Computerprogrammprodukt zum Betreiben einer Steuerung (1), welches Programmcodesequenzen aufweist, die bei Ausführung in einer Steuerung gemäß einem der Ansprüche 1 bis 6 ein Verfahren zum Einketten von Software-Bausteinen in den Funktionsablauf (7) der Steuerung (1), insbesondere nach einem der Ansprüche 7 bis 9, ausführen.

## Claims

1. Cyclically operating controller (1), particularly a programmable logic controller, having a memory (1b) which can store software modules (2, 3, 4, 3', 3'') of a user program which are able, during the program execution (7) of the controller (1), to be loaded into the memory by means of a load command (a) and are able, following the loading, to be linked into the program execution (7) of the controller (1) by means of a link command (c), **characterized in that** a link operation module (9) is present in the main memory (1b) and contains a user link program which can be used to control the linking of the software modules (3'') into the program execution (7) of the controller (1), and **in that** the link operation module (9) contains conditions which are taken as a basis for linking in the software module (3'') which is to be linked in.

2. Controller according to Claim 1, **characterized in that** the link operation module (9) can be started by means of the link command (c).

3. Controller according to Claim 1 or 2, **characterized in that** the data relating to the software module (3'') which is to be linked in, such as module type, module name or number and addresses, are transmitted to the link operation module (9) by means of the link command (c).

4. Controller according to one of Claims 1 to 3, **characterized in that** the link operation module (9) can be used to read and/or change data from the software module (3'') which is to be linked in.

5. Controller according to one of Claims 1 to 4, **characterized in that** at least one lower-level controller (11) is present which can be edited by means of the link operation module (9).

6. Controller according to one of Claims 1 to 5, **characterized in that** the link operation module (9) can also be executed when the program execution (7) of the controller (1) is not carried out.

7. Method for linking software modules (3, 4, 5, 3', 3'') of a user program into the program execution (7) of a controller (1), particularly a programmable logic controller, in which the software modules (3') are first of all loaded into a loading memory (1a) and are then linked into the program execution (7) of the controller (1) by means of a link command (c), **characterized in that** the linking is effected by means of a user link program of a link operation module (9), which user link program can be used to control the linking of the software modules (3'') into the program execution (7) of the controller (1), and **in that** the software module (3'') which is to be linked in is not linked in until after conditions which the user link program contains have been satisfied.

8. Method according to Claim 7, **characterized in that** the link program portion is started by means of the link command.

9. Method according to Claim 7 or 8, **characterized in that** the link program portion can edit the software module (3'') which is to be linked in.

10. Computer program product for operating a controller (1) which has program code sequences which, when executed in a controller according to one of Claims 1 to 6, perform a method for linking software modules into the program execution (7) of the controller (1), particularly according to one of Claims 7 to 9.

## Revendications

1. Commande ( 1 ) fonctionnant de manière cyclique, notamment automate programmable, comprenant une mémoire ( 1b ), dans laquelle des modules ( 2, 3, 4, 3', 3" ) logiciels d'un programme utilisateur peuvent être mémorisés et qui, pendant la séquence ( 7 ) du programme de la commande ( 1 ), peuvent être chargés dans la mémoire au moyen d'une instruction ( a ) de chargement et qui, après le chargement, peuvent être mis en chaîne dans le déroulement du programme de la commande ( 1 ) au moyen d'une instruction (c) de mise en chaîne, **caractérisée en ce qu'**un module ( 9 ) d'opération de mise en chaîne est présent dans la mémoire ( 16 ) de travail, module qui contient un programme de mise en chaîne utilisateur au moyen duquel la mise en chaîne des modules ( 3" ) logiciels dans le déroulement du programme de la commande (1) peut être commandée.

2. Commande suivant la revendication 1, **caractérisée en ce que** le module ( 9 ) d'opération de mise en chaîne peut être lancé au moyen d'une instruction ( c ) de mise en chaîne.

3. Commande suivant la revendication 1 ou 2, **caractérisée en ce que** les données concernant le module ( 3" ) logiciel à mettre en chaîne, comme le type du module, le nom du module ou le numéro de module, ainsi que des adresses sont transmises au module ( 9 ) d'opération de mise en chaîne au moyen de l'instruction ( c ) de mise en chaîne.

4. Commande suivant l'une des revendications 1 à 3, **caractérisée en ce que** des données du module ( 3" ) logiciel à mettre en chaîne peuvent être lues et/ou peuvent être modifiées au moyen du module ( 9 ) d'opération de mise en chaîne.

5. Commande suivant l'une des revendications 1 à 4, **caractérisée en ce qu'**il y a au moins une commande ( 11 ) subordonnée qui peut être mise en fonctionnement au moyen du module ( 9 ) d'opération de mise en chaîne.

6. Commande suivant l'une des revendications 1 à 5, **caractérisée en ce que** le module ( 9 ) d'opération de mise en chaîne peut travailler aussi lorsque la séquence (7) de fonctionnement de la commande ( 1 ) n'est pas effectuée.

7. Procédé de mise en chaîne de modules ( 3, 4, 5, 3', 3" ) logiciels d'un programme ( 7 ) utilisateur d'une commande ( 1 ), notamment d'un automate programmable, dans lequel on charge d'abord les modules ( 3" ) logiciels dans une mémoire ( 1a ) de chargement et ensuite on les met en chaîne dans la séquence (7) de programme de la commande (1) au moyen d'une instruction ( c ) de mise en chaîne, **caractérisé en ce qu'**on effectue la mise en chaîne au moyen d'un programme de mise en chaîne utilisateur d'un module ( 9 ) d'opération de mise en chaîne, au moyen duquel la mise en chaîne des modules ( 3" ) logiciels dans la séquence ( 7 ) de programme de la commande ( 1 ) peut être commandée, et
**en ce que** l'on effectue la mise en chaîne des modules ( 3" ) logiciels à mettre en chaîne, seulement après que des conditions contenues dans le programme de mise en chaîne utilisateur sont satisfaites.

8. Procédé suivant la revendication 7, **caractérisé en ce que** l'on lance la partie de programme de mise en chaîne au moyen de l'instruction de mise en chaîne.

9. Procédé suivant la revendication 7 ou 8, **caractérisé en ce que** la partie de programme de mise en chaîne peut faire fonctionner le module ( 3" ) logiciel.

10. Produit de programme d'ordinateur pour faire fonctionner une commande ( 1 ), qui a des séquences de code de programme, lesquelles exécutent lors de l'exécution dans une commande suivant l'une des revendications 1 à 6, un procédé de mise en chaîne de modules logiciels dans la séquence (7) de fonctionnement de la commande ( 1 ), notamment suivant l'une des revendications 7 à 9.
